# EUROPEAN PATENT APPLICATION

(11) **EP 1 041 506 A2**
(43) Date of publication of application: **04.10.2000**
(21) Application number: 00302284.5
(22) Date of filing: 21.03.2000
(51) Int. Cl.: G06K 9/20, G07C 9/00

(54) **Self service terminal**

(30) Priority: 01.04.1999 GB 9907514
(71) Applicant: NCR INTERNATIONAL INC., Dayton, Ohio 45479 (US)
(72) Inventor: Leong, Liem Hak, Angus, Dundee, Scotland DD5 3SF (GB); Nicoll, Kenneth A., Birkhill, Dundee, Scotland DD2 5PG (GB); Paton, Grant, Dundee, Scotland DD4 7QG (GB)
(74) Representative: Williamson, Brian

(57) **Abstract**

A method of implementing biometrics recognition for recognising a user based on one or more of the user's facial characteristics is described. A self service terminal (10) implementing biometrics recognition based on one or more facial characteristics of a user is also described. The terminal (10) includes a display (12) for displaying information to the user and a camera (16) for recording an image of one or more of the user's facial characteristics, such as the user's iris. The camera (16) is located behind the display (12) so that the camera (16) is operable to record an image of one or more of the user's facial characteristics while the user observes the display (12).

## Description

The present invention relates to a self service terminal (SST) implementing biometrics recognition based on facial characteristics. In particular, the invention relates to a SST implementing biometrics recognition using human iris identification.

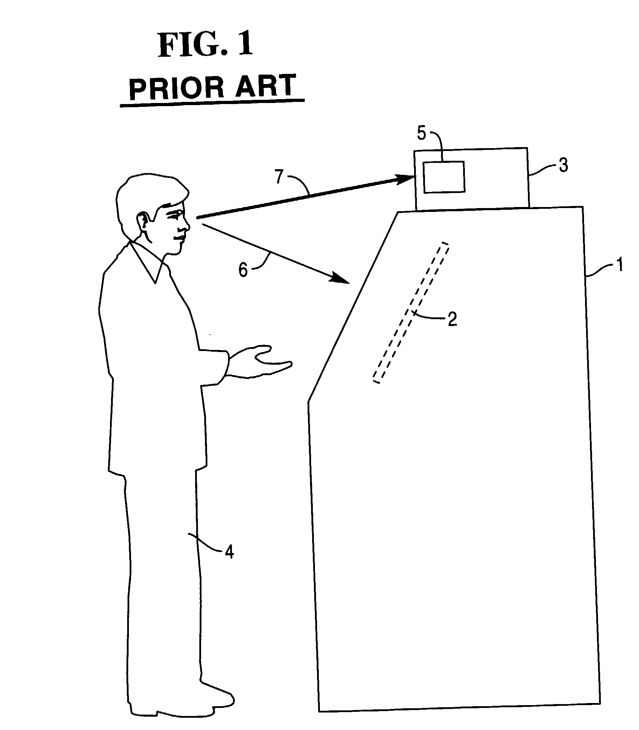

SSTs implementing iris recognition are known. One known system is shown in Fig 1. Fig 1 shows an SST 1 incorporating a display 2 as part of a user interface. An iris identification biometrics recognition unit 3 is located at the top of the SST 1. In use, the display 2 instructs a user 4 to look at the unit 3 to enable a camera 5 within the unit 3 to record an image of the user's iris. Thus, initially, the user looks at the display 2 (in the direction shown by arrow 6). The user then looks at the unit 3 (in the direction shown by arrow 7) which typically has a smoked glass front. Once the camera 5 has recorded an image and the identity of the user 4 has been established, the user 4 reverts his/her gaze to the display 2.

There are various disadvantages associated with this. The user 4 does not know when he/she can stop looking at the smoked glass front of unit 3 and revert to looking at the display 2, because unit 3 does not provide any visual indication that the user has been recognised. If the user looks away from the unit 3 before completion of the recognition process, then the recognition process has to start again. Another disadvantage is that unit 3 is unsightly as it appears to be located above the user interface, and it has a smoked screen which does not attract or maintain the user's attention. Another disadvantage is that the unit 3 is liable to vandalism because it is located at the top of the SST 1.

It is an object of an embodiment of the invention to obviate or mitigate one or more of the above disadvantages.

According to a first aspect of the invention there is provided a method of implementing biometrics recognition for recognising a user based on one or more facial characteristics of the user, the method being characterised by the steps of:
recording an image of a user through a display, where the display is operable to display visual information to the user;
processing the recorded image; and
comparing the processed image with a database of stored processed images to obtain a match and thereby recognise a user.

The method may include the further step of displaying graphical information on the display to draw the user's attention to the display.

An alternative method may involve replacing the step of comparing the processed image with a database of processed images with the step of comparing the processed image with one processed image from a database of processed images to verify the identity of the user.

According to a second aspect of the invention, there is provided a self service terminal implementing biometrics recognition based on one or more facial characteristics of a user, the terminal including a display for displaying information to the user and a camera for recording an image of one or more of the user's facial characteristics, characterised in that the camera is located behind the display so that, in use, the camera is operable to record an image of one or more of the user's facial characteristics while the user observes the display.

By virtue of the invention, the camera records an image of a user through the display so that the user does not have to avert their gaze to facilitate recognition. Locating the camera behind the display means that the line of sight of the camera may be arranged so that it is the same as the line of sight of the display.

Preferably, the one or more facial characteristics used is the iris pattern of the user. Alternatively, the facial geometry of the user may be used.

Preferably, the camera is coupled to an optical arrangement which conveys light from the rear of the display to the camera. The optical arrangement may comprise one or more mirrors and/or lenses.

In one embodiment, the user's face (particularly one of the eyes), the display, and the camera are all aligned on a single straight optical axis. In another embodiment, the optical arrangement may deflect the light in a convolute path so that the camera is not located directly behind the display.

The SST may be an automated teller machine (ATM).

The display and camera may be incorporated into a single integral unit.

In the drawings,
Fig 1 is schematic diagram of a prior art SST.
   Embodiments of the invention will now be described, by way of example, with reference to the accompanying drawings, in which:
Fig 2 is a schematic diagram of a SST in accordance with an embodiment of the invention;
Fig 3 is a simplified block diagram of the SST of Fig 2; and
Fig 4 is a schematic diagram of an SST in accordance with another embodiment of the invention.

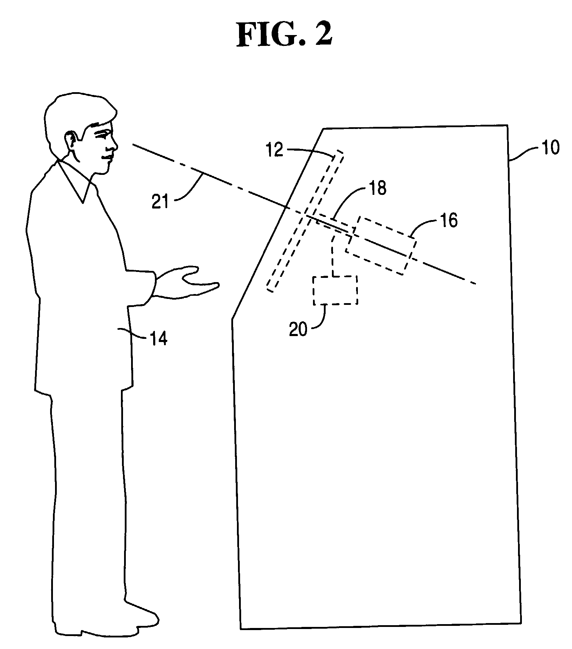

Referring to Fig 2, there is shown a SST 10 in the form of an ATM. ATM 10 provides the cash dispensing and receipt printing facilities which are associated with a conventional ATM. As these facilities are well known to those skilled in the art, they will not be described in detail herein.

ATM 10 also includes a display 12 for displaying graphical information, such as transaction information, to a user 14 and an encrypting keyboard (not shown).

The display 12 is a liquid crystal display (LCD) which can be pulsed so that when it is energised it displays graphical information to the user 14, but when it is de-energised it is transparent. In this embodiment, the pulse rate is at least 100hz, which is high enough to ensure that the user does not notice the pulsing because of persistence of vision.

A camera 16 is located behind the display 12 and is oriented and aligned to be operable to record an image of the face of a user of average height. In this embodiment, the camera 16 is used to record an image of an iris of the user 14.

Camera 16 has an optical coupling arrangement 18 which is controlled by an iris locator unit 20. The iris locator generally comprises two additional cameras for locating the iris to be imaged, and a controller for adjusting the optical coupling arrangement 18 so that it can gather light from the located iris. The optical coupling arrangement 18 is a combination of one or more mirrors and one or more lenses.

The user's face, the display 12, the optical coupling arrangement 18, and the camera 16 are all located on a straight optical axis 21.

Suitable apparatus for implementing the camera 16, optical coupling arrangement 18, and iris locator unit 20 is available from "SENSAR" of 121 Whittendale Drive, Moorestown, New Jersey, USA 08057.

The camera 16 is also pulsed at the same rate as the LCD 12, but in anti-phase, so that the camera 16 is operable to record images through the LCD 12 when the LCD 12 is transparent.

When user 14 wishes to conduct a transaction, for example withdrawal of cash, the user 14 approaches the ATM 10 and looks at the LCD 12. The LCD 12 displays information to the user 14 requesting that the user looks at the LCD 12 and keeps his/her eyes motionless. The iris locator unit 20 senses that a user is present, and locates the iris of one of the eyes of the user 14. The camera 16 then records an image of the selected iris through the LCD 12. This is possible because the camera 16 is energised when the LCD 12 is transparent.

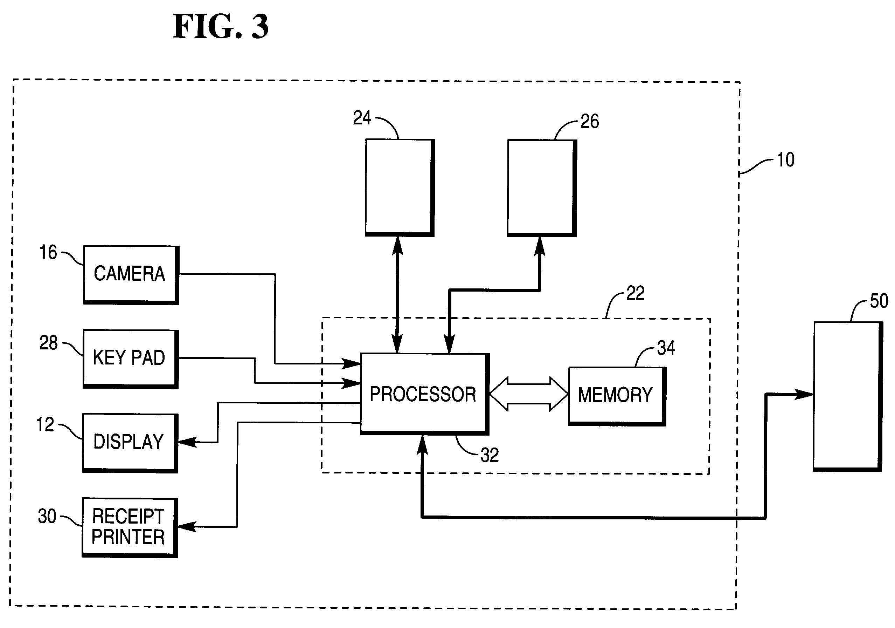

Referring to Fig 3, which shows a simplified block diagram of some of the modules in ATM 10, the ATM 10 further comprises a controller unit 22 which communicates with a biometrics sensing unit 24, a cash dispenser module 26, camera 16, a key pad 28, LCD 12, and a receipt printer 30. The controller unit 22 comprises a processor 32 and associated memory 34.

The image of the user's eye which has been recorded by camera 16 is conveyed to biometrics sensing unit 24 via processor 32. The sensing unit 24 operates on the image to produce a signature (or code) which is conventionally called an iris code. Various algorithms are available for processing an image of an iris to create an iris code. This iris code is then conveyed by processor 32 to a remote database 50 via a network connection (not shown). For each authorised user, database 50 contains an iris code and associated identification information, such as the user's name, bank account details, and such like.

The remote database 50 compares the received iris code with the stored iris codes to obtain a match. Typically, the comparison is performed on a bit by bit basis (an iris code comprises a sequence of bits) using an exclusive OR Boolean function. To improve the speed of the comparison, all of the bit comparisons are usually performed simultaneously. Two iris codes match if they differ by less than a predetermined number of bits.

If the user is not determined to be correct, i.e. if the recognition fails because the iris code is not a close enough match to any of the stored iris codes, then the user is denied access to the facilities provided by the ATM 10.

If the user 14 is recognised by the ATM 10, then the user 14 is allowed to access the facilities provided by the ATM 10 and a menu of the various transactions available to the user 14 is displayed on the LCD 12. The remainder of the transaction is the same as for a conventional ATM.

It will be appreciated that the invention has the advantage that a user does not have to avert his/her eyes to facilitate recognition by the ATM 10. This greatly improves usability as a user's eyes are automatically drawn to the display 12. This also has the advantage that an ATM according to the invention can be used in a very similar way to a conventional ATM. The display can also provide graphical notification that the user has been identified, thereby reducing the number of abortive recognition attempts caused by a user averting his/her eyes prematurely. Incorporating the camera into the SST provides a more compact SST and therefore saves space. The SST is also more economical to manufacture because of the invention.

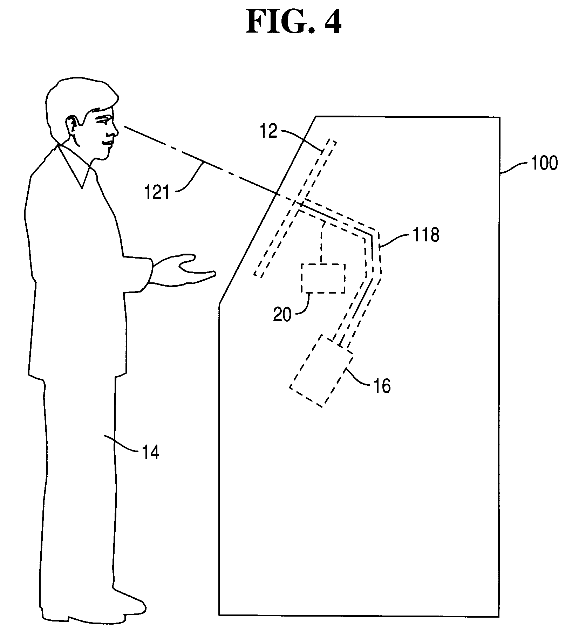

Various modifications may be made to the above described embodiment, for example, the display may be a any convenient display, such as a light emitting polymer. In other embodiments, the display may be a projection screen (such as is used in EP 883830 or in US 5,394,198), and the display may have a small aperture through which the camera receives light. In other embodiments polarisation techniques may be used to ensure that the display is transparent to the camera but not transparent to the user, this technique is described in US 5,400,069. In other embodiments, biometrics may be used to verify the identity of the user 14 rather than to identify the user 14. In other embodiments, such as that shown in Fig 4, the camera 16 may not be located on a straight axis passing through the user's eye, the display 12, and the camera 16; an ATM 100 may have an optical coupling arrangement 118 which deflects received light through a convolute path 121 into the camera 16 so that the camera 16 is not located directly behind the display 12. All references cited in this specification, and their references, are incorporated by reference herein where appropriate for appropriate teachings of additional or alternative details, features, and/or technical background.

## Claims

1. A method of implementing biometrics recognition for recognising a user based on one or more facial characteristics of the user, the method being characterised by the steps of: recording an image of a user through a display, where the display is operable to display visual information to the user; processing the recorded image; and comparing the processed image with a database of stored processed images to obtain a match and thereby identify the user.

2. A self service terminal (10) implementing biometrics recognition based on one or more facial characteristics of a user, the terminal (10) including a display (12) for displaying information to the user and a camera (16) for recording an image of one or more of the user's facial characteristics, characterised in that the camera (16) is located behind the display (12) so that, in use, the camera (16) is operable to record an image of one or more of the user's facial characteristics while the user observes the display (12).

3. A terminal according to claim 2, wherein the one or more facial characteristics used is the iris pattern of the user.

4. A terminal according to claim 2, wherein the facial geometry of the user is used.

5. A terminal according to claim 3, wherein the terminal further comprises an iris locating unit (20).

6. A terminal according to any of claims 2 to 5, wherein the user's face, the display (12), and the camera (16) are all aligned on a single optical axis.

7. A terminal according to any of claims 2 to 6, wherein the camera (16) is coupled to an optical arrangement (18) which conveys light from the rear of the display (12) to the camera (16)

8. A terminal according to claim 7, wherein; the optical arrangement (18) comprises one or more mirrors or lenses.

9. A terminal according to any of claims 2 to 8, wherein the terminal is an automated teller machine (ATM).

10. A terminal according to any preceding claim, wherein the display (12) and camera (16) comprise a single integral unit.
